# EUROPEAN PATENT APPLICATION

(11) **EP 1 442 956 A1**
(43) Date of publication of application: **04.08.2004**
(21) Application number: 04000986.2
(22) Date of filing: 19.01.2004
(51) Int. Cl.: B62B 9/12

(54) **Seat core of child-care instrument**

(30) Priority: 28.01.2003 JP 2003018217
(71) Applicant: Aprica Kassai Kabushikikaisha, Osaka-shi, Osaka 542-0082 (JP)
(72) Inventor: Kassai, Kenzou, Osaka-shi Osaka 542-0083 (JP); Ohnishi, Ichiro, Chuo-ku Osaka-shi Osaka 542-0082 (JP)
(74) Representative: Hofer, Dorothea, Dipl.-Phys.

(57) **Abstract**

A seat core (20) continuously comprises a backrest surface portion (21) supporting a back of a child from behind, a seating surface portion (22) supporting buttocks of the child from beneath, a leg-supporting surface portion (23) supporting legs of the child in a state of bed, a first hinge portion (24) positioned between the backrest surface portion (21) and the seating surface portion (22), and a second hinge portion (25) positioned between the seating surface portion (22) and the leg-supporting surface portion (23).

## Description

### BACKGROUND OF THE INVENTION

### Field of the Invention

The present invention relates to a seat core mounted on a child-care instrument such as a baby carriage, a child safety seat, a baby bed/chair or the like, to form a seat and more particularly, it relates to a seat core mounted on a child-care instrument which can be switched between a state of chair and a state of bed.

### Description of the Background Art

Figs. 1 and 2 show baby carriages disclosed in Japanese Unexamined Patent Publication No. 8-175395. The baby carriage 1 comprises a body 2 and a seat hammock 3 mounted on the body 2 to form a seat.

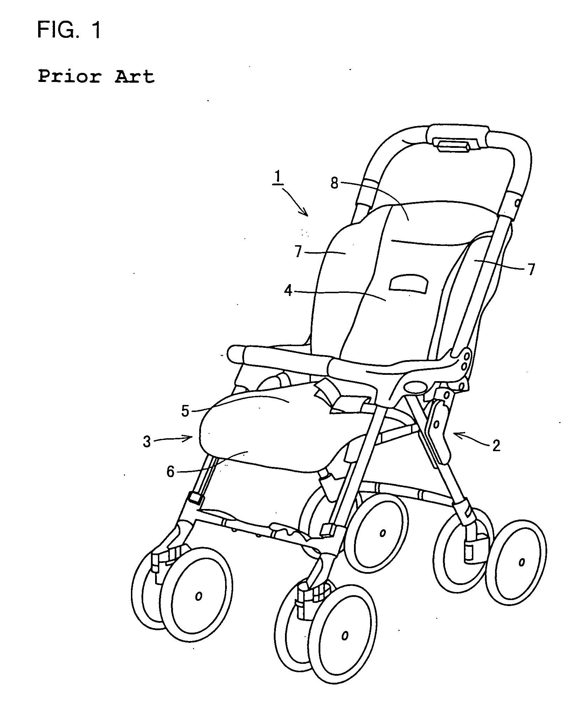

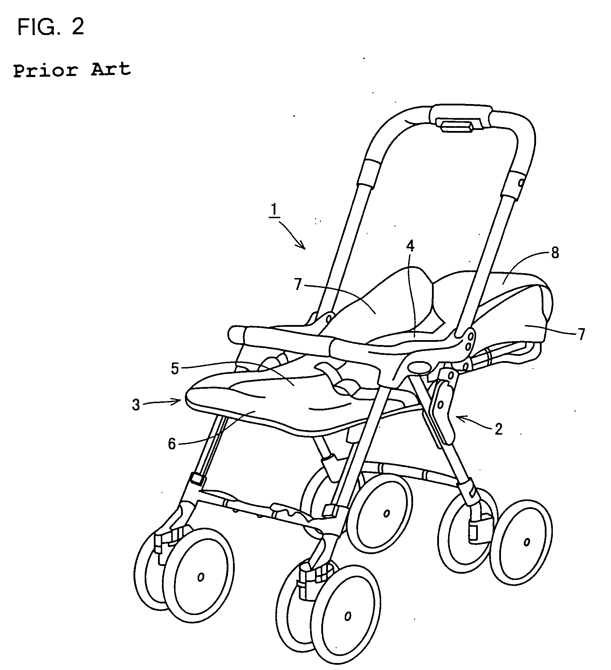

The baby carriage 1 is constituted so as to be switched between a state of chair shown in Fig. 1 and a state of bed shown in Fig. 2. Although it is not shown in the drawings, the baby carriage 1 is constituted such that front and rear wheels come close and side wheels come close such that a width dimension is reduced when it is folded.

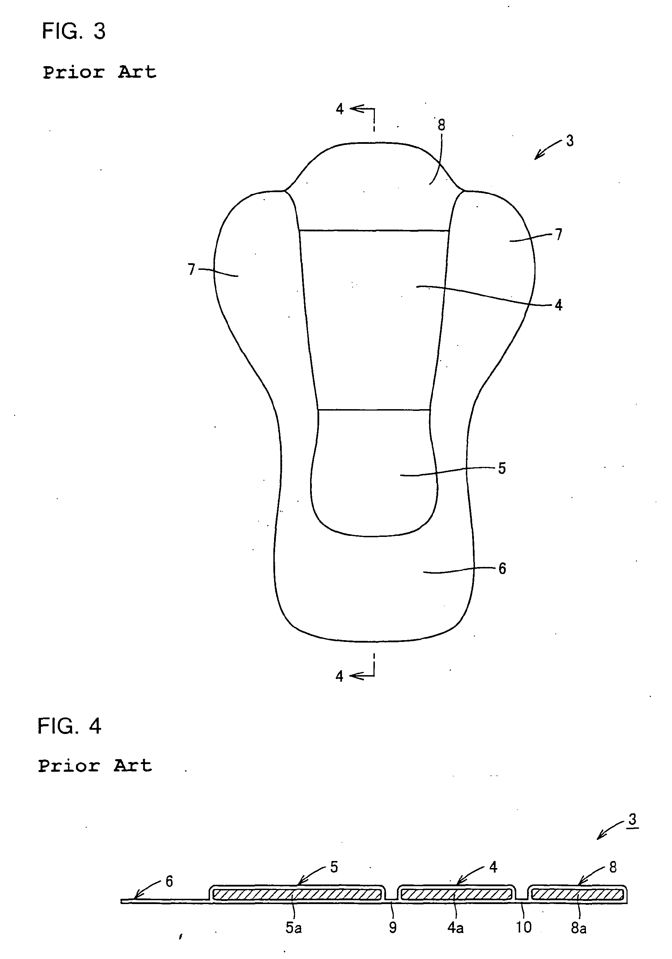

Fig. 3 shows the general seat hammock 3 which has been conventionally used. The seat hammock 3 comprises a backrest surface portion 4 supporting a back of a child from behind, a seating surface portion 5 supporting buttocks of the child from beneath, a head guard surface portion 8 rising from an upper edge of the backrest surface portion 4 in the state of bed, and a pair of upper side surface portions 7 rising from both side edges of the backrest surface portion 4 in the state of bed especially.

As can be clear from comparison between Figs. 1 and 2, the baby carriage 1 is constituted such that the seating surface can be extended when it becomes in the state of bed. Legs of the child can be supported by the seating surface extension portion from beneath. The seat hammock 3 has a leg-supporting surface portion 6 forming this seating surface extension portion. In the state of chair shown in Fig. 1, the leg-supporting surface portion 6 of the seat hammock 3 which formed the seating surface extension portion hangs downward.

Fig. 4 is a sectional view taken along line 4-4 in Fig. 3. As shown in Fig. 4, a head guard surface core 8a, a backrest surface core 4a and a seating surface core 5a are contained in the head guard surface portion 8, the backrest surface portion 4 and the seating surface portion 5 of the seat hammock 3, respectively. Meanwhile, there is no core in the leg-supporting surface portion 6 of the seat hammock 3 and only a sewed cloth exists there. Hinge portions 9 and 10 formed of a sewed cloth are formed between the seating surface portion 5 and the backrest surface portion 4, and between the backrest surface portion 4 and the head guard surface portion 8, respectively.

The body 2 of the baby carriage 1 has a seating surface extension member which can be drawn frontward from a seating surface supporting member, in order to extend the seating surface frontward in the state of bed. One example of the seating surface extension member is in the shape a flat plate formed of a resin. Since a rib or recess is formed in the seating surface extension member in the shape of the resin flat plate, a concave and convex configuration is provided on its surface.

Another example of the seating surface extension member comprises a pair of side pulling rods pulled frontward from both sides of the seating surface supporting member, and a flexible belt provided between the pair of side pulling rods.

When the baby carriage 1 is switched to the state of bed, the leg-supporting surface portion 6 of the seat hammock 3 is spread on the seating surface extension member. Since the leg-supporting surface portion 6 is formed of the sewed cloth, touch of the concave and convex configuration in the seating surface extension member in the shape of the flat plate of resin is felt under feet or legs of the child. In addition, according to the one which supports the leg-supporting surface portion 6 from beneath by the flexible belt, since there is a downward drop, the feet or legs of the child cannot be stably supported.

Furthermore, as can be clear from Fig. 4, there is formed a stepped portion between the seating surface portion 5 having the seating surface core 5a and the leg-supporting surface portion 6 formed only the sewed cloth because of the thickness of the core. This stepped portion gives the child a feeling of discomfort. Similarly, since the hinge portion 9 formed of only the sewed cloth provides a relatively large concave portion, this also gives the child a feeling of discomfort.

### SUMMARY OF THE INVENTION

It is an object of the present invention to provide a seat core which can form a smooth plane for the whole of a bed surface when a child-care instrument is in a state of bed.

A seat core of a child-care instrument according to the present invention is mounted on the child-care instrument which can be switched between a state of chair and a state of bed, to form a seat, and provided separately from the child-care instrument itself. The seat core continuously comprises a backrest surface portion supporting a back of a child from behind, a seating surface portion supporting buttocks of the child from beneath, a leg-supporting surface portion supporting legs of the child from beneath in the state of bed, a first hinge portion positioned between the backrest surface portion and the seating surface portion in order to enable a slanting operation of the backrest surface portion, and a second hinge portion positioned between the seating surface portion and the leg-supporting surface portion in order to enable the leg-supporting surface portion to be bent from the seating surface portion.

According to the above constitution, since the seat core has the leg-supporting surface portion continued from the seating surface portion, there is no stepped portion between the seating surface portion and the leg-supporting surface portion. In addition, since the leg-supporting surface portion has the core, even when a seating surface extension member has a concave and convex configuration or it is formed of a belt, touch of the concave and convex configuration is not felt under the child and there is no drop in the leg-supporting surface portion. Still further, since the core of the backrest surface portion and the core of the seating surface portion are continuously formed, there is no large concave portion between them.

According to one embodiment, the backrest surface portion, the seating surface portion, the leg-supporting surface portion, the first hinge portion and the second hinge portion are integrally formed of a common member. In this case, the first and second hinge portions are formed by reducing thicknesses of the relevant cores, for example. The seat core is in the shape of a sheet of a plate formed of a synthetic resin, for example. Thus, there can be provided a comfortable bed surface for the child with very simple constitution.

As another embodiment, the first hinge portion includes a first hinge tape attached onto an abutting portion between the backrest surface portion and the seating surface portion, and the second hinge portion includes a second hinge tape attached onto an abutting portion between the seating surface portion and the leg-supporting surface portion. In this case also, since the core forming the backrest surface portion, the core forming the seating surface portion and the core forming the leg-supporting surface portion are continuously formed, the smooth bed surface can be provided.

As a preferable embodiment, the seat core continuously comprises a head guard surface portion rising from an upper edge of the backrest surface portion in the state of bed and a third hinge portion positioned between the backrest surface portion and the head guard surface portion in order to enable a rising operation of the head guard surface portion. According to this constitution, since the core of the head guard surface portion continued from the backrest surface portion protects the top of head of the child, it is preferable in respect of safety.

As a further preferable embodiment, the seat core further continuously comprising a pair of upper side surface portions rising from both side edges of the backrest surface portion in the state of bed and a fourth hinge portion positioned between the backrest surface portion and each upper side surface portion in order to enable a rising operation of the upper side surface portion. According to this constitution, since the core of the upper side surface portion continued from the backrest surface portion protects the sides of head of the child, it is preferable in respect of safety.

In a case of the child-care instrument which reduces its dimension in the width direction to be folded, in order to be able to be shrunk in the width direction, preferably, the seating surface portion continuously comprises a center seating surface portion, a pair of side seating surface portions connected to both side edges of the center seating surface portion and a fifth hinge portion positioned between the center seating surface portion and each side seating surface portion in order to enable a bending operation of each side seating surface portion from the center seating surface portion. According to this constitution, a size in the width direction can be reduced when folded, while a large area of the seating surface portion is provided when used.

From the similar point of view, according to one embodiment, the leg-supporting surface portion continuously comprises a center leg-supporting surface portion, a pair of side leg-supporting surface portions connected to both side edges of the center leg-supporting surface portion and a sixth hinge portion positioned between the center leg-supporting surface portion and each side leg-supporting surface portion, in order to enable a bending operation of each leg-supporting surface portion from the center leg-supporting surface portion. According to this constitution, a size in the width direction can be reduced when folded, while a large area of the seating surface portion is provided when used.

As the child-care instrument, there are a baby carriage, a child safety seat, a baby bed/chair and the like. According to one embodiment, the seat core is mounted on a baby carriage. In this case, the seat core is put in a seat hammock of the baby carriage, for example. As another embodiment, the seat core may be mounted on a body of the baby carriage and the seat hammock is provided on the seat core.

### BRIEF DESCRIPTION OF THE DRAWINGS

Fig. 1 is a perspective view showing a baby carriage disclosed in Japanese Unexamined Patent Publication No. 8-175395;
Fig. 2 is a perspective view showing a state of bed of the baby carriage shown in Fig. 1;
Fig. 3 is a plan view showing a conventional seat hammock;
Fig. 4 is a sectional view taken along line 4-4 in Fig. 3;
Fig. 5 is a plan view showing one embodiment of the present invention;
Fig. 6 is a sectional view taken along line 6-6 in Fig. 5;
Fig. 7 is a perspective view showing a seat core in a state of chair; and
Fig. 8 is a perspective view showing the seat core in the state of bed.

### DESCRIPTION OF THE PREFERRED EMBODIMENTS

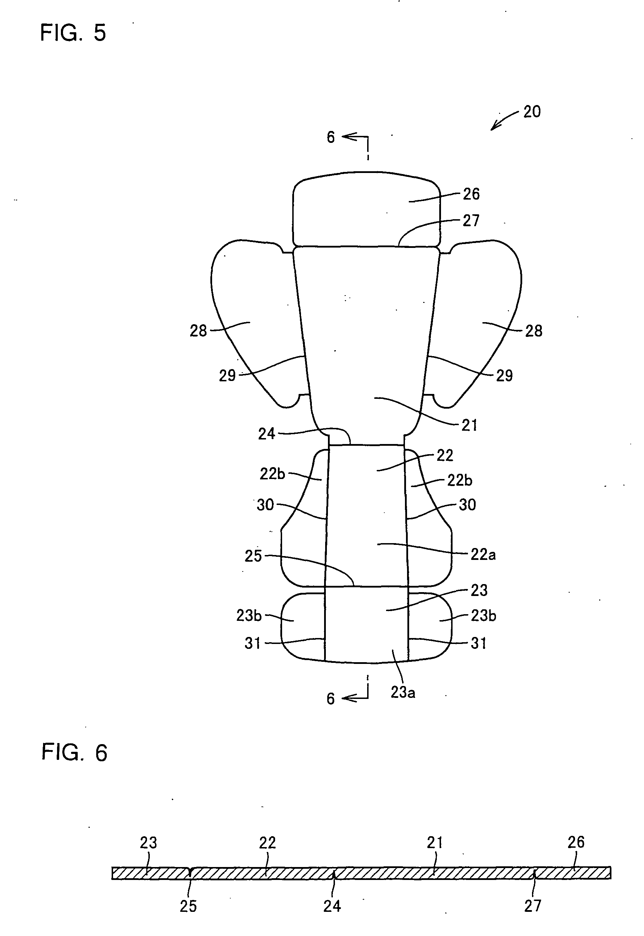

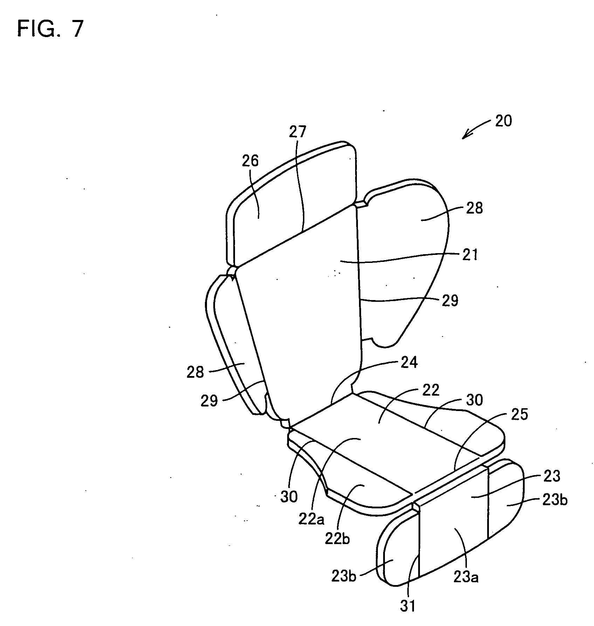

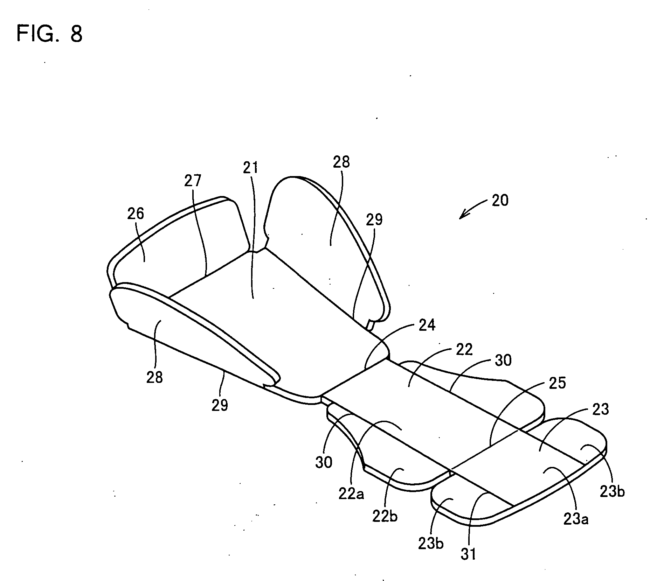

One embodiment of the present invention is described with reference to Figs. 5 to 8. Fig. 5 is a plan view showing a seat core 20, Fig. 6 is a sectional view taken along line 6-6 in Fig. 5, Fig. 7 is a view showing a used state as a chair, and Fig. 8 is a view showing a used state as a bed.

The illustrated seat core 20 is a core which can be put in a seat hammock of a baby carriage, for example. As another usage, it may be mounted on a body of a baby carriage and a seat hammock is put thereon.

The baby carriage can be switched between a state of chair and a state of bed. The core 20 is provided separately from the body of the baby carriage and put in the seat hammock or mounted on the body to form a seat.

The seat core 20 is a sheet of flat plate formed of a synthetic resin, and continuously comprises a backrest surface portion 21, a seating surface portion 22, a leg-supporting surface portion 23, a first hinge portion 24, a second hinge portion 25, a head guard surface portion 26, a third hinge portion 27, a pair of upper side surface portions 28, and a fourth hinge portion 29.

The backrest surface portion 21 forms a part supporting a back of a child from behind, and the seating surface portion 22 forms a part supporting buttocks of the child from beneath. The backrest surface portion 21 is connected to the seating surface portion 22 through the first hinge portion 24 which is thinned by reducing a thickness of the resin, for example. Therefore, as shown in Fig. 7, when the backrest surface portion 21 is used in the state of chair, it rises from a rear edge of the seating surface portion 22, and the backrest surface portion 21 and the seating surface portion 22 are extended almost horizontally when used in the state of bed as shown in Fig. 8.

The leg-supporting surface portion 23 forms a part supporting legs of the child from beneath when used in the state of bed as shown in Fig. 8. Meanwhile, as shown in Fig. 7, when it is used in the state of chair, it is bent downward from a front edge of the seating surface portion 22. The second hinge portion 25 enables a bending operation of the leg-supporting surface portion 23 and it is thinned by reducing a thickness of the resin, for example.

The head guard surface portion 26 forms a plane continuously extending upward from the backrest surface portion 21 when used in the state of chair as shown in Fig. 7, and rises upward from an upper edge of the backrest surface portion 21 to protect a top of head of the child when used in the state of bed shown in Fig. 8. The third hinge portion 27 enables a rising operation of the head guard surface portion 26 and it is thinned by reducing a thickness of the resin, for example.

The pair of upper side surface portions 28 rises upward from both side edges of the backrest surface portion 21 to protect sides of head of the child when used in the state of bed especially. The fourth hinge portion 29 enables a rising operation of the upper side surface portion 28 and it is thinned by reducing a thickness of the resin, for example.

The illustrated seat core 20 is applied to the baby carriage which is folded so that a dimension is reduced in the width direction, for example. In order to enable reduction in the width direction, the seating surface portion 22 comprises a center seating surface portion 22a and a pair of side seating surface portions 22b connected to both side edges of the center seating surface portion 22a through a fifth hinge portion 30. The fifth hinge portion 30 enables a bending operation of each side seating surface portion 22b from the center seating surface portion 22a when the baby carriage is folded and it is thinned by reducing a thickness of the resin, for example.

Similarly, the leg-supporting surface portion 23 comprises a center leg-supporting surface portion 23a and a pair of side leg-supporting surface portions 23b connected to both side edges of the center leg-supporting surface portion 23a through a sixth hinge portion 31 in order to enable the reduction in the width direction. The sixth hinge portion 31 enables a bending operation of each side leg-supporting surface portion 23b from the center leg-supporting surface portion 23a when the baby carriage is folded and it is thinned by reducing a thickness of the resin, for example.

According to the illustrated embodiment, the first to sixth hinge portions are all formed of thinned parts of the resin. In this case, in order to implement a desired bending direction, preferably, the first hinge portion 24 and the third hinge portion 27 are cut in from the back surface of the seat core 20 and the second hinge portion 25 is cut in from the front surface thereof as shown in Fig. 6. Although it is not shown in the drawing, the fourth hinge portion 29 is preferably cut in from the back surface of the seat core 20. Regarding the fifth and sixth hinge portions 30 and 31, their cut-in positions depend on which folding mechanism is employed. For example, when the side seating surface portion 22b and the side leg-supporting surface portion 23b are bent backward when folded, they are cut in from the front surface of the seat core.

As described above, and according to the illustrated seat core, since the core forming the backrest surface portion, the core forming the seating surface portion, and the core forming the leg-supporting surface portion are integrally and continuously extended when used in the state of bed, there can be provided a smooth plane for the whole of a bed surface. In other words, there can be provided the comfortable bed surface for the child.

In addition, the embodiment shown in Figs. 5 to 8 are illustrative. Therefore, various kinds of modifications and variations can be applied to the illustrated embodiment within the same or equivalent range of the present invention. Some of them are illustratively listed and described hereinafter.
(1) The seat core may be put in the seat hammock of the baby carriage or may be directly mounted on the body of the baby carriage. In the latter case, the seat hammock is put on the seat core, for example.
(2) According to the illustrated embodiment, the seat core was formed of a sheet of the flat plate. As another embodiment, a plurality of cores may be used and a hinge tape is attached onto an abutting portion of the cores. More specifically, an end face of the core forming the backrest surface portion butts against an end face of the core forming the seating surface portion, and a first hinge tape is attached onto the abutting portion. Furthermore, an end face of the core forming the seating surface portion butts against an end face of the core forming the leg-supporting surface portion and a second hinge tape is attached onto the abutting portion. Even in this constitution, there can be provided a smooth plane for the whole of the bed surface.
(3) There is a case where the seat core is not provided with the head guard surface portion 26 and the pair of upper side surface portions 28.
(4) In a case where the baby carriage does not shrink in the width direction when folded, the hinge portions 30 and 31 of the seating surface portion and the leg-supporting surface portion can be omitted.
(5) The child-care instrument to which the seat core of the present invention is applied is not limited to the baby carriage, and a child safety seat or a baby bed/chair may be included. In other words, the present invention can be widely applied to the child-care instrument which can be switched between the sate of chair and the sate of bed.

## Claims

1. A seat core of a child-care instrument provided separately from a body of the child-care instrument and mounted on the child-care instrument which can be switched between a state of chair and a state of bed, to form a seat, continuously comprising:
a backrest surface portion (21) supporting a back of a child from behind;
a seating surface portion (22) supporting buttocks of the child from beneath,
a leg-supporting surface portion (23) supporting legs of the child from beneath in said state of bed;
a first hinge portion (24) positioned between said backrest surface portion and said seating surface portion in order to enable a slanting operation of said backrest surface portion; and
a second hinge portion (25) positioned between said seating surface portion and said leg-supporting surface portion in order to enable said leg-supporting surface portion to be bent from said seating surface portion.

2. The seat core of a child-care instrument according to claim 1, wherein said backrest surface portion (21), said seating surface portion (22), said leg-supporting surface portion (23), said first hinge portion (24) and said second hinge portion (25) are integrally formed of a common member.

3. The seat core of a child-care instrument according to claim 2, wherein said first and second hinge portions (24,25) are formed by reducing thicknesses of the relevant cores.

4. The seat core of a child-care instrument according to claim 1, wherein said first hinge portion (24) includes a first hinge tape attached onto an abutting portion between said backrest surface portion and said seating surface portion, and said second hinge portion (25) includes a second hinge tape attached onto an abutting portion between said seating surface portion and said leg-supporting surface portion.

5. The seat core of a child-care instrument according to claim 1, continuously comprising:
a head guard surface portion (26) rising from an upper edge of said backrest surface portion (21) in said state of bed; and
a third hinge portion (27) positioned between said backrest surface portion (21) and said head guard surface portion (26) in order to enable a rising operation of said head guard surface portion.

6. The seat core of a child-care instrument according to claim 1, continuously comprising:
a pair of upper side surface portions (28) rising from both side edges of said backrest surface portion (21) in said state of bed; and
a fourth hinge portion (29) positioned between said backrest surface portion (21) and said each upper side surface portion (28) in order to enable a rising operation of said upper side surface portion.

7. The seat core of a child-care instrument according to claim 1, wherein said seating surface portion (22) continuously comprises:
a center seating surface portion (22a);
a pair of side seating surface portions (22b) connected to both side edges of said center seating surface portion; and
a fifth hinge portion (30) positioned between said center seating surface portion and said each side seating surface portion, in order to enable a bending operation of said each side seating surface portion from said center seating surface portion.

8. The seat core of a child-care instrument according to claim 1, wherein said leg-supporting surface portion (23) continuously comprises:
a center leg-supporting surface portion (23a);
a pair of side leg-supporting surface portions (23b) connected to both side edges of said center leg-supporting surface portion, and
a sixth hinge portion (31) positioned between said center leg-supporting surface portion and said each side leg-supporting surface portion, in order to enable a bending operation of said each side leg-supporting surface portion from said center leg-supporting surface portion.

9. The seat core of a child-care instrument according to claim 1, wherein the relevant seat core is mounted on a baby carriage.

10. The seat core of a child-care instrument according to claim 9, wherein the relevant seat core is put in a seat hammock of the baby carriage.
